# EUROPEAN PATENT APPLICATION

(11) **EP 1 452 213 A1**
(43) Date of publication of application: **01.09.2004**
(21) Application number: 01989692.7
(22) Date of filing: 30.11.2001
(51) Int. Cl.: A63F 13/10, G02B 26/02, G06F 17/60

(54) **METHOD FOR A COMPUTER NETWORK RACING GAME AND AN OPTICAL-MECHANICAL GENERATOR OF TWO RANDOM NUMBERS USED FOR CARRYING OUT SAID METHOD**

(30) Priority: 01.10.2001 RU 2001126384
(71) Applicant: Dovgan, Vladimir Viktorovich, pos. Nemchinovska, Moskovskaya obl., 143013 (RU)
(72) Inventor: DOVGAN, Vladimir Viktorovich, pos Nemchinovka, Moskovskayaobl 143013 (RU)
(74) Representative: Kador & Partner
(86) International application number: PCT/RU2001/000518
(87) International publication number: WO 2003/028833

(57) **Abstract**

The invention relates to a method for playing multiplayer games and to a device for implementation of same, which may be used for race competition between many personal computer users.

The method comprises playing a game on users' personal computers connected to a server over a network. Image movement speed of moving objects is formed so as to be constant. Two random numbers are programmed into the game software. A means enabling users to control image movement speed is made so as to be capable of providing only two states of speed control signals. Each of the said states of the means is correlated to one of the two random numbers. When a state of the said means coincides with the random number, the image movement speed of moving objects is changed. When a state of the said means does not coincide with the random number, the initial speed is maintained. A race is finished either when an image reaches a definite position on the screen or upon expiration of a preset time. The game is played in several stages, each comprising at least one race. Winner of each stage is given a classification rating, participation in the game only of players with the similar classification rating being thus ensured.

A generator comprises a drum made transparent and rotating. Light-absorbing balls and light-reflecting balls are located inside the drum. A beam emitted by a light source is directed to the area where the balls are located. A photo detector is arranged so as to be capable of receiving a beam reflected from the balls.

## Description

### FIELD OF THE INVENTION

The invention relates to a method for multiplayer games and a device for the implementation of the same, which may be used for racing contest of multiple PC users as well as for further improving their learning.

### BACKGROUND ART

Known in the art are many computer network games realizing some or other game situations related to various sports, e.g., soccer, races, etc. For the participation in such games various technical means are used, which are logged in an information network, e.g., the Internet is used for playing such multiplayer games (A1, WO 00/10663).

Known in the art is a game (A1, WO 00/16869), as well as a technique and a system for racing, wherein telemetry means are used for downloading data on real races onto personal computers of users, and the latter may virtually participate in the race (A2, WO 00/67867).

The limitations of the said technical solutions are: one PC user may not actually participate in a game with another PC user, and even in a case of his virtual victory it is mythical; in real races pictorial images of vehicles and the circuit (environment) are continuously changed, therefore, it is necessary, while a PC user is driving a vehicle, to continuously update files of dynamic data on its speed and position, which actually results in inefficient downloading of excess data onto the computer; very big information flow volumes in the network itself.

And it seems to be complicate to use existing computer race games, which are usually distributed by various companies on CDs where races are depicted on a monitor screen as multicolor and dynamic animated images of vehicles, for playing over the Internet. This is, first of all, due to limited transmission rates of quickly changing big data files over the Internet for users connected to the network through low-speed communication equipment.

A PC user usually participates in such race games against other virtual vehicles, and data on their positions and on speed of moving images on the monitor screen is programmed into the software; therefore, after studying the peculiar features of such a game, a user quickly becomes tired of and bored with it.

Other versions of race games are for maximum two players who compete against each other, using one PC. The winner is a person possessing, in comparison to the other one, a better reaction on game events visualized on the computer monitor screen and being capable to quicker manipulate keys of the PC keyboard or a graphic positioning device (a mouse). A game usually comprises one stage, which reduces its fascination and attractiveness; such games often lack learning nature and do not enable to develop the erudition of PC users.

The author of this invention does not know about any combination and carrying-out of computer races under any random law where the full illusion of manipulating the speed of a moving object is created for a participant in a game.

Also known in the art are devices designed, e.g., for playing roulette. Such devices comprise a light source and photo-detecting devices (optical sensors) for determining the position of the ball (US, A, 4,396,193; RU, C1, 2122878; US, A, 6,005,831).

Neither constructively, nor functionally such devices enable to realize an optomechanical random two-number generator that would be capable of taking, from the output of its photo detector, a sequence of random signals characterized by two levels (0/1). At the same time, it would be desirable to use such a device for confirming the competition results, since the players would clearly see that the game results may not be falsified due to the organizers' dishonesty or a third party's possibility to influence the game results. And, if random number generators of various software models are used in computers for, e.g., realizing various lotteries or bingos, it arouses suspicions of PC users in respect of the game results.

### SUMMARY OF THE INVENTION

This invention is based on the task to design a method of playing a race game wherein the game result would not depend on the software peculiar features known to a PC user and wherein it would be possible to expand the game capabilities while playing as well as a number of the players, to raise the reliability of playing a game due to lowering of predictability of game event results, to improve sightliness and to raise an interest in a game from the side of PC users.

A technical result, which may be attained upon implementing the method, is the limitation of information flows simultaneously transmitted over a network, e.g., over the Internet, the reduction of input and output data files handled by a PC and, accordingly, a server, and an increase in the number of PC users participating in a game.

An additional technical result, which may be attained upon implementing the method, is an increase in the players' erudition.

A technical result, which may be attained upon constructing the device, is that clear unpredictability of race results is ensured.

For solving the stated task the claimed method of race game playing involves:
- playing a game on users' PCs connected over a network to a server with the game software downloaded, the server being used to transmit data files over the network to PCs that receive them and form, on their monitor screens, images of at least two moving objects, the data on PC users are stored in the server's data base;
- forming the initial movement speed of the said images at the start when it is equal to zero, and after the start when it is constant or equal to zero;
   - providing PCs with a means enabling users to control image movement speed of the said moving objects;
   - the game software is programmed with two random numbers produced by a random two-number generator;
   - the said means enabling users to control image movement speed of the said moving objects is made so as to ensure only two states of the control signals for controlling movement speed and, consequently, for controlling changes in the positions of the moving object images;
   - each of the two mentioned states of the means enabling users to control image movement speed of the moving objects is correlated in advance with one of the two random numbers produced by the said random two-number generator; if one of the states of the said means coincides with the preset random number correlated therewith, the image movement speed of the said moving objects is changed, but if the state of the said means does not coincide with the preset random number correlated therewith, the said initial speed of after-start movement of the said moving object images is maintained;
   - the race is over when the moving object image on the computer monitor of one of the users reaches a definite preset position on the screen, or the race is terminated upon expiration of the preset time; accordingly, the winner of the race is considered to be a PC user whose moving object image has first reached the said definite position on the screen or whose moving object image has passed the longest distance compared to the said moving object image of the other PC user; the particulars on the race winner are loaded into the data base of the server;
   - the said playing of the game on users' PCs is conducted in stages comprising one or more said races, the winner of each stage is given a classification rating, which is stored in the data base of the server, thus ensuring playing the game at subsequent stages by PC users having the same classification rating.

Some other embodiments of implementing the method of playing a race game are possible wherein it is advisable that:
- the said classification rating is to be assigned to the winner of two successive races;
- an optomechanical generator is to be used as a random two-number generator, which is to be made in the form of a transparent rotating drum filled with light-absorbing balls and light-reflecting balls, a light source is positioned on the drum in the area where balls are located, and a light beam reflected from the balls is received by a photo detector having its output connected with the server;
- the picture of the said transparent rotating drum is to be transferred to the server and to the monitor screens of the users' PCs with a television or video camera;
- the values of the signals coming from the output of the photo detector are to be stored in the data base of the server for recording them in a protocol.

It is further advisable that:
- at least one of the final game stages is to be held on personal computers in a television studio, and the picture of the said television studio with the said transparent rotating drum is to be transmitted to video monitors by television transmission means;
- when loading the particulars on the PC users into the data base of the server, additional data on the continent, the country and the city that are represented by a user participating in the game is to be loaded into the data base;
- when using animated images of cars as the said moving object images, additional data on the makers of the cars, their types, petrol types, oil trademarks, colors of cars, which a PC user may select from for playing the game, is to be loaded into the data base of the server;
- when using animated images of aircraft as the said moving object images, additional data on the producers of the aircraft and their types, which a PC user may select from for playing the game, is to be loaded into the data base of the server;
- when using animated images of ships, speed-boats, yachts as the said moving object images, additional data on the manufacturers of the vessels, their types and colors, which a PC user may select from for playing the game, is to be loaded into the data base of the server;
- when using animated images of horses as the said moving object images, additional data on their breeds, places taken at previous races, speeds, endurance, colors, which a PC users may select from for playing the game, is to be loaded into the data base of the server;
- when using animated images of animals as the said moving object images, additional data on their natural habitat, habits, running speed, endurance, color, which a PC user may select from for playing the game, is to be loaded into the data base of the server;
- two keys of the user's computer keyboard are to be used as a means enabling users to control movement speed of the moving object images;
- an image of two symbols on the user's computer monitor screen, which are actuated by positioning the cursor over one of the symbols and clicking the mouse, is to be used as a means enabling users to control image movement speed of the moving objects;
- the representation of the scroll bar on the monitor screen of the user's PC, which is actuated with the cursor when performing a "drag-and-drop" operation, is to be used as a means enabling users to control image movement speed of the moving object;
- when playing a game on users' PCs connected to the server over a network, the Internet is to be used as the network.

For the purpose of solving the task to design a method of playing a race game, wherein the game result would not depend on the software peculiar features known to a PC user, to improve sightliness and to lower the predictability of game event results an optomechanical random two-number generator is used.

The said random two-number generator comprises a drum, which is made transparent and rotating, light-absorbing balls and light-reflecting balls located in the said drum, a light source, which beam is directed to the area where the balls are located, and a photo detector arranged so as to be capable of detecting a light beam reflected from the balls.

The said task has been solved and the claimed technical result has been attained owing to the following: only two states of a means enabling users to control image movement speed of the moving objects are compared with two random numbers produced by the generator; the data file on the location (which is, a priori, selected known) of the moving objects is kept unchanged and only the data file on the object movement speed changeable under random law may be modified; and a game is conducted in several stages, the winner of each stage being given a classification rating and PC users with the similar rating being able to continue playing.

The said advantages as well as the peculiar features of this invention will be become apparent from the description of its preferred embodiment with references to the appended figures.

### BRIEF DESCRIPTION OF THE DRAWINGS

Fig. 1 depicts a simple system for implementing the claimed method;
Fig. 2 shows a view of the monitor screen and various possible means the players may use to control the image movement speed of the moving objects selected by them;
Fig. 3 is a flow chart of the program algorithm used for implementing the method according to the invention;
Fig. 4 depicts a system for use in a television studio at the final stages of a game;
Fig. 5 is a schematic construction of a random two-number generator.

### DESCRIPTION OF THE PREFERRED EMBODIMENT

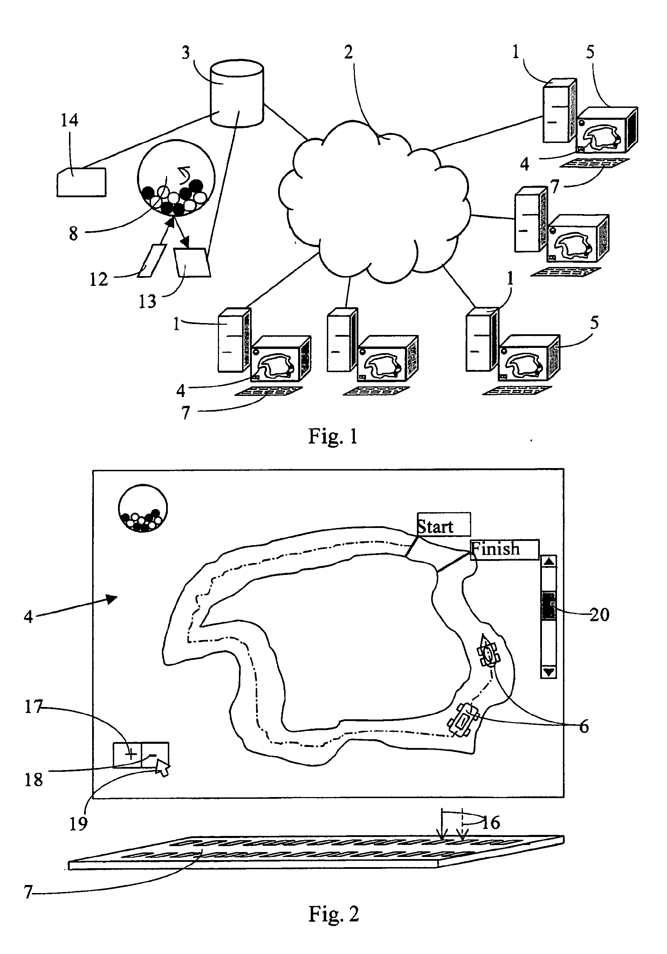

The method for playing a computer network race game comprises (Figs. 1,2).

A game is played on users' PCs 1 connected over the network 2 to the server 3 (Fig. 1) incorporating the game software. The server 3 transmits data files over the network 2 to personal computers 1 that receive them and form images of, at least, two moving objects 6 on the screens 4 of the monitors 5 (Fig. 2). By transmitting the return information flow from the personal computers 1 to the server 3 the data on the users of the personal computers 1 are loaded into the server data base for storing. Different types of systems for transmitting data, in particular over the Internet, and playing various games are well known from the prior art; connections between the equipment units of such systems are also known from the said information sources and do not display any additional features when playing the said race game.

The claimed technical solution utilizes the formation of the initial image movement speed of the said moving objects 6, which is equal to zero at the start and is constant or equal to zero after the start. For this synchronous signals from the timer of the server 3 are used, which are processed by the game software for the purpose of forming information about a new position of a moving object 6.

The personal computers 1 are pre-equipped with a means enabling their users to control the image movement speed of the moving objects 6 selected by them. Such means are also well known. Usually the arrow keys of a keyboard 7 are used (up, left, down, right) as well as some additional keys that, e.g., being pressed simultaneously with an arrow key, issue commands for defining movement direction and applying additional acceleration, braking, jumps, etc. to the moving objects 6 by transmitting corresponding data files to the central processor. A graphical pointing device (mouse) or joysticks are often used for the same purpose.

The software of the server 3 incorporates a random two-number generator 8 (Fig. 1). Random number generators are usually used, which are implemented by the features of the game software. Such generators are widely used in lotto or bingo games. But in such games they usually perform the function of a lotto machine and, therefore, present in a binary format a rather big number of codes corresponding to decimal digits, up to hundreds of different codes. Moreover, after occurrence of a digit it is necessary to keep watching for its second appearance and block that digit. In the present technical solution the generator produces only two random numbers corresponding to "0" or "1". Therefore, if a random number generator incorporated in the software is used in the proposed game, its program is significantly simplified, which contributes in the reduction of information flows in the network 2 and data files processed by the personal computers 1 and by the server 3. The simplicity of the random two-number generator 8 allows to realize it according to the optomechanical principle of action that will be described below.

The means that enables the users to control the image movement speed of the said moving objects 6 is made so as to ensure only two states of control signals (commands) intended to control the movement speed and, accordingly, changes in the positions of the images of the moving objects 6. The spatial positions of the moving objects 6 are preset by the software, therefore the processing of the data files related to changes in the positions of the moving objects 6 on the screen or the data files related to changes in the movement direction of the moving objects 6 is simplified. This also significantly reduces information flows in the network 2 and, accordingly, increase the information transmission rates, thus enabling to speed up the race game itself. (Therefore, in the future the game may be played in several stages, enabling to organize fast virtual races with the participants from various cities, countries, continents as well as world championships in the Internet.)

Each of the two states of the means enabling users to control the image movement speed of the moving objects 6 is pre-correlated with one of two random numbers produced by the said random two-number generator 8. When one of the states of the said means (e.g., pressing either of the two keys on the keyboard 7) coincides with the preset random number "0" or "1", as produced by the generator 8 and correlated with that state, the image movement speed of the moving objects 6 is changed. When the state of the said means does not coincide with the preset random number (0/1) correlated thereto, the said initial image movement speed of the moving objects 6 after the start is maintained. The speed of the moving objects 6 is changed by the software, by changing the position of the moving object 6 due to an increment in the speed value along the pre-selected path, for which purpose the data file corresponding to the initial movement speed of the objects 6 is changed. The speed is usually changed to increase it, but nothing may prevent the participant from using this method to slow down a moving object 6. The choice of coincidence of the value (0/1), as produced by the random two-number generator 8, with one of the two states of the means enabling the users to control the image movement speed of the moving objects 6 is conditional and preset by the software. And for moving objects 6 of different types, e.g., cars, aircraft, vessels, animals, their own value for incrementing the speed may be selected, either a higher or a lower one. The initial speed of the moving objects 6 is usually selected as constant, and for creating the full illusion of controlling and managing a moving object 6 by the user of a personal computer 1 the initial speed and its increment value are selected to be in correspondence with the type of a moving object 6. Thus, for a moving object 6 representing an animated image of an aircraft the initial speed and its increment value are selected to be high compared to an animated image of a car or an animal. For an object 6 moving very slowly, e.g., an animated image of an animal, the initial speed of movement of a moving object 6 after the start may be selected to be equal to zero, and the speed of such a moving object 6 may be incremented only in the case where one of the two states of the means enabling the users to control the image movement speed coincides with the preset random number correlated therewith.

A race is finished when the image of a moving object 6 on the screen 4 of the monitor 5 of the personal computer 1 of one user reaches a definite preset position on the screen 4 of the monitor 5 (indicated on Fig. 2 as "Finish"). Also, a race may be finished upon expiration of the preset time. Accordingly, the race winner is considered to be the user of a personal computer 1, whose image of a moving object 6 has reached the said definite position on the screen 4 ("Finish") first or whose image of a moving object 6 has passed the longest distance compared to the said image of a moving object 6 on the personal computer 1 of another user (the path is indicated on Fig. 2. by a chain line). The particulars on the race winner are loaded into the data base of the server 3.

Playing of a game on users' personal computers 1 (Fig. 1) is conducted in several stages comprising one or more races (conducted in accordance with Fig. 2). The winner of each stage is given a classification rating to be stored in the data base of the server 3 (Fig. 1). Then the game is continued at subsequent stages between the users of personal computers 1, who has the similar classification rating, upon comparison of the classification ratings assigned to all the participants in the game. It is done by simply comparing the classification ratings stored in the data base of the server 3 upon completion of each stage. Due to fast game rounds in the Internet, smaller data files processed by the personal computers 1 and reduced information flows in the network 2 it is possible to conduct races with the participation of multiple users of personal computers 1, increase the number of the participants in the game without significant load onto the network 2, thus enabling to hold several championships within a short time. Also, a player, who has missed one championship, but has a definite classification rating, may participate in another championship being held later, starting from a game level which corresponds to the classification rating won by him in previous races and championships.

Depending on the rules established by the organizers, a stage may comprise one race or may comprise races until two wins of one participant in the game, etc. However, as the studies have showed, in order to additionally raise the attractiveness of a game it is advisable that a stage is not completed after one or two races. The most interesting proved to be games with stages where the said classification rating for a successfully completed stage is assigned to the winner of two successive races.

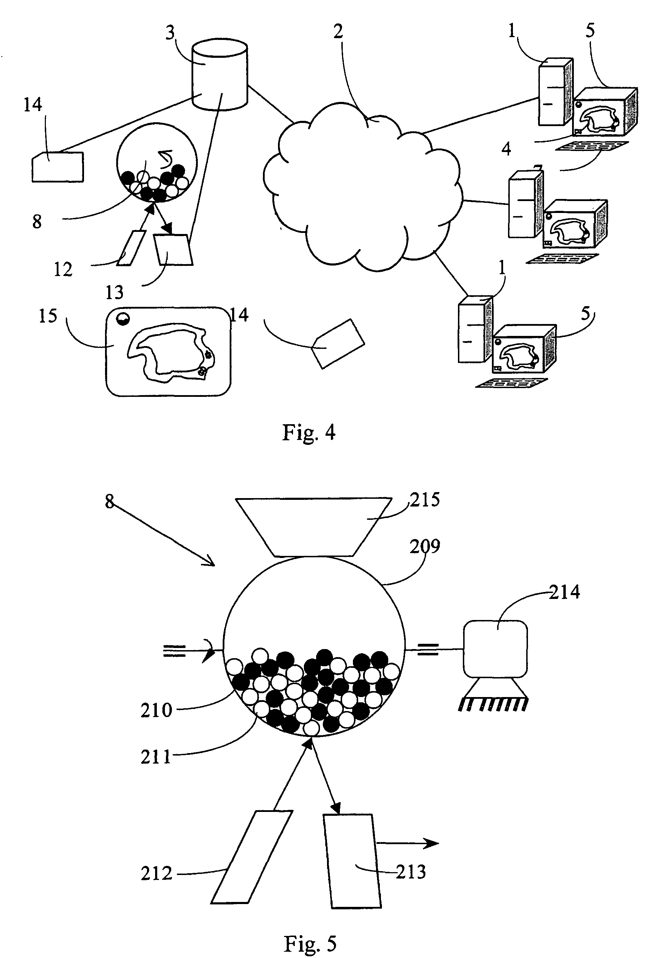

An optomechanical generator (Fig. 5) is used as the random two-number generator 8. It is made in the form of a transparent rotating drum 9 filled with light-absorbing balls 10 and light-reflecting balls 11. Light from a light source 12 is directed on the said drum 9 and to the area where the balls 10 and 11 are located. The light beam, as reflected from the said balls 10 and 11, is received by a photo detector 13. The output of the photo detector 13 is connected to the server 3 (Fig. 1). The construction and the principle of action of the generator 8 are described in more detail hereinafter.

An interface to link the generator 8 to the server 3 (Fig. 1) is provided as follows.

The generator 8 is connected to the server 3, where the site comprising the software of the claimed game is located, over a RS-232 serial port. Several registers and an IRQ (Interrupt Request) line are assigned to the port for signaling the server 3 about a change in the port state.

Bits of a data byte are transferred one-by-one with the use of one conductor. For the synchronization purpose a group of data bits is preceded by a special starting bit and followed by a parity check bit and one stop bit.

The data transmission serial port is based on an INTEL 16450, 16550, 16550A microchip. This microchip is a universal asynchronous receiver/transmitter (UART). The microchip comprises several internal registers accessible by input/output commands.

The program has access only to the buffer registers, while copying of the information into the shift registers and the shift procedure is performed by the UART microchip automatically.

The asynchronous serial port is connected to external devices over a special connector. There exist two standards covering the RS-232-C interface connectors, namely, DB-25 and DB-9. The first has 25 and the second 9 terminal connections. The connector wiring is normal.

The values of signals from the output of the generator 8 (from the output of the photo detector 13) are stored in the data base of the server 3 for recording them into a protocol (Fig. 1).

A resident driver program continuously monitors the states of the registers related to the serial port and sends a signal to the application program when the state of the registers is changed.

The application program, upon receipt of a signal from the driver, enters the signal value (0/1) into the server data base table having the following structure:

| Field Number | Field Type | Field Function |
|---|---|---|
| 1 | date | Time mark (YYYY-MM-DD-HH-MM-SS) |
| 2 | int | Signal value from the OM RNG (0/1) |
| 3 | int | Signal value from Player 1 (0/1) |
| 4 | int | Signal value from Player 2 (0/1) |

After this the application program performs, further actions depending on an incoming signal from the driver, which receives information from the optomechanical generator, and incoming signals from the players.

Thus, the signals coming from the generator 8 and the players are recorded in the protocol. The data of the above table represents a protocol to be further processed and analyzed for the purposes of proving the absolute reliability and controllability of the race game.

A picture of the said transparent rotating drum may be transmitted to the server 3 and the screens 4 of the monitors 5 of the users' personal computers 1 (Fig. 2) with a television or video camera 14 (Fig. 1).

At present there is a wide choice of digital video cameras that may be connected to a computer, e.g., Intel Create and Share Camera Pack, Logitech QuickCam, 3Com HomeConnect, and the like. Also, any camcoder may be used by connecting it to a video image digitization board or to a video board with a special input, such as ATI All-in-Wonder. A video camera 14 may be connected over a parallel interface or over a USB port. Some cameras are completed with PCI boards that perform the function of an image digitization device.

An image from a Web-camera is transmitted to the web-server with the use of FTP-protocol (file transfer protocol). A number of software packages may be used for this purpose. Two most popular packages are Webcam32 and SpyCam.

The described method enables to deliver video images to the Internet users even with low-speed communication equipment.

Transmission of images in the format of streamed video may be organized for users having broad-band channels (ISDN, dedicated lines).

There exist two main ways of organizing streamed video: JavaCamPush and Image Pull.

The first one is Java applet that, in combination with a Web page configured for loading applets visualizes a video image coming from a video camera. Image Pull uses JavaScript instead of Java for the same purpose, but in this case video images are transmitted to the server 3 as a succession of quickly changing each other static images; this method enables to override limitations of some brouser versions.

At least one of the said final game stages is held on personal computers 1 in a television studio (Fig. 4). With the use of a television transmission system the picture of the television studio and the said transparent rotating drum is transmitted to the video monitors 15. As a video monitor 15 a household television receiver may be used for the purpose of showing the race game to a big audience, a projection receiver, a liquid-crystal panel or a plasma panel arranged in the studio for a big audience, the monitors of personal computers 1. The generator 8 is constantly located in the signal perception area of a television or video camera 14, from where the signal is transmitted to the server 3 as well as to the video monitors 15 of the players and television audience. In this case the Internet may not be used, and any broad-band local area network 2 may be used as the network 2. At final stages it enables to visualize races on the screen of the video monitor 15 and on the screens 4 of the monitor 5 in the form of multicolor and dynamic animated images and present the game to a big television audience.

When loading the particulars on the users of the personal computers 1 into the data base of the server 3 for storage, the data on the continent, the country and the city the user represents in the game is added thereto. Therefore, this game, due to its relative transience, enables to hold championships with widely varied number of participants. For example, first representatives of only one country are competing, then the winners from different countries participate in continent championships, and the winners from the continents will participate in a world championship that is to be held, as it has been said above, in a television studio.

When using animated images of cars as the said moving objects 6 (Fig. 2), additional data on the makers of the cars, their types, petrol types, oil trademarks, colors of cars, which the user of a personal computer 1 may select from for playing the game, is to be loaded into the data base of the server 3. The loading of such data enables to develop the scope of thinking of the game participants and make the game more cognitive. Moreover, the game becomes more humorous and funny, since a vehicle selected by the user of a personal computer 1 from the data base of the server 3, e.g., a truck, may outrun a Formula 1 racer in the course of the game. In such cases various comic phrases, aphorisms and sayings may be visualized on the screen 4 of the monitor 5.

Absolutely different animated images may be used as images of the moving objects 6, such as those of aircraft, vessels, horses or other animals, which data are contained in the data base of the server 3. Competitions with the use of animated images of animals are preferred for younger children. In such a case data on the natural habitat of the corresponding animals, their feed, habits, running speed, endurance, colors, etc. is loaded into the data base of the server.

As a means enabling the users to control the image movement speed of the moving objects 6 any two keys 16 of the keyboard 7 of the user's personal computer 1 (Fig. 2) may be used.

As a means enabling the users to control the image movement speed of the moving objects 6 the images of two symbols 17, 18 on the screen 4 of the monitor 5 of the user's personal computer 1 may be used, which are accessed by positioning the cursor 19 over one of the symbols and clicking the graphical pointing device (mouse).

As a means enabling the users to control the image movement speed of the moving objects 6 the image of the scroll bar 20 (slider)on the screen 4 of the monitor 5 of the personal computer 1 (Fig. 2) may be used. In such a case a deovertion from the center of the scroll bar 20 when performing a drag-and-drop operation with the cursor results in one or the other state of the means enabling the users to control the image movement speed of the moving objects 6.

When playing the game on the users' personal computers 1 connected over the network 2 to the server 3 the Internet is used as the network 2 in order to reach the maximum possible for a given time speed of the game and ensure the participation of the most possible number of players.

### An embodiment of the claimed method for playing a race game

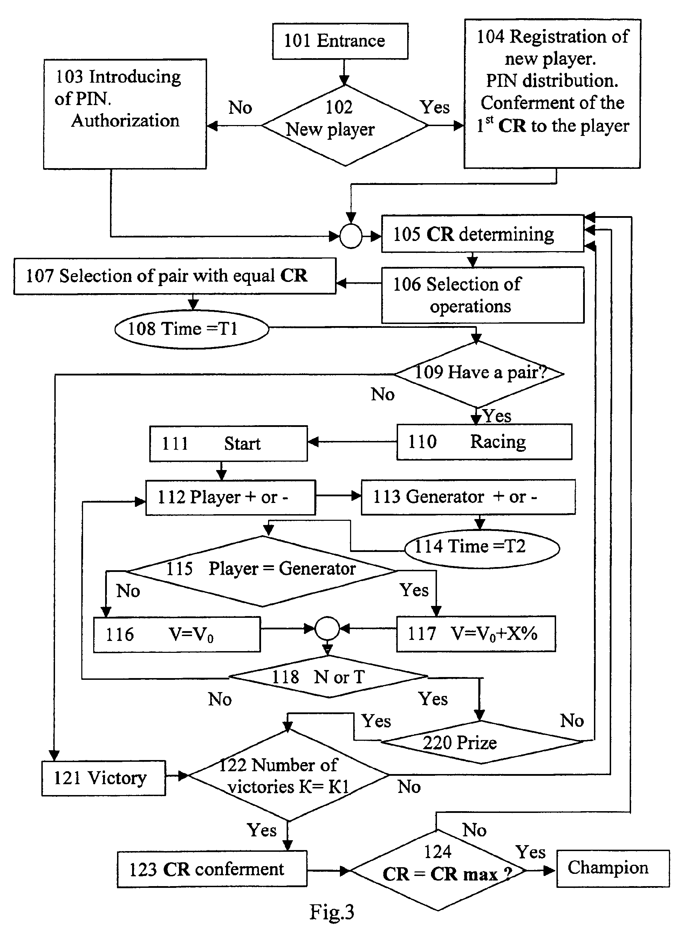

The game software is accessed (Fig. 3) through the block 101 stored in the memory of the server 3. The players wishing to participate in the game are separated in the block 102. The separation is done in the interactive mode by means of an answer personally given by a potential player to a question asked by the software. Depending on the answer, the software transmits the data on the game participant either to the block 103 intended for the players already registered in the data base of the program, or to the block 105 intended for players who accessed the software for the first time.

The registration of new players is effected on the geographical basis with the use of the political division of the Earth in the mode of interaction with the computer software. The player is invited to choose a continent for which he wishes to play, then one of the countries actually existing on that continent, then one of the actual territorial units in the country so chosen (a region, a state, a canton, a land, etc.). After filling in the standard questionnaire in the interactive mode, the player is given his personal PIN-code (personal identification number - password) generated by the software. The player retains the right to change his PIN-code for another one that does not contradict to the software specifications. After that the player is given the first (initial) classification rating (CR) corresponding to the first level (L) of the game - L = 1. The information on the player and his CR is stored in the computer software data base.

It is sufficient for the players, whose data are already stored in the software data base, to enter their respective PIN-codes in order to participate in the game, after which the software identifies information from the data base with the data entered by the player in the block 103. In a case of coincidence the player begins the game from the level reached by him at previous sessions (see the block 105).

Using the base stored in the block 106 the player may choose from among those proposed by the software: kind of the moving object 6, e.g., a car, and type of the moving object 6; grade of fuel to be used; grade of motor oil to be used; sporting outfit for himself, accessories; other parameters and specifications of the selected moving object 6. The selected parameters and specifications do not influence the game itself and are of just cognitive and amusing nature enlarging the scope of thinking of the participants and bringing the spirit of actual races into the game.

At a time the software may be accessed an unlimited number of players - the users of personal computers 1. The computer software, using its data base, monitors the appearance in the game of the second player with a classification rating CR equal to the CR of the first player, i.e., the player, who finished the game at the same game level L, with the same number of wins at the stages, and at the very moment forms out of them a competing pair (of the game participants). The third player, who has entered the software, forms a pair with the fourth entered player; the fifth player forms a pair with the sixth player, etc. The formation of competing pairs (the game participants) occurs within the time T1 in the block 108. In a case where upon expiration of the time T1 an odd number of players with the same CR have joined the game, then the last player, whose pair has not been formed, is considered a race winner for the reason of the "non-appearance" of his competitor (see the blocks 108 and 121).

Upon expiration of the time period T1 the races begin between the players with the same CR, i.e., the players being at the same game level L (see the blocks 110 and 111). The race represents a contest of two moving objects 6 going along the closed, ring circuit at the initial linear or angular speed "V0". One of the moving objects 6 is controlled by the first player, the second one - by the second player. The appearance of the circuit and the moving objects 6 are displayed for the players on the screens 4 of the monitors 5 (Fig. 2). The race time is broken down into the fixed time periods T2, the duration of which is known to the players beforehand and may be displayed on the screens 4 of the monitors 5 in the real-time mode (in descending order). Within each time period T2 each player is invited to make a choice between two alternative states of the means enabling the user to control the image movement speed of the moving object 6 selected by him. As described above, two keys of the keyboard 7, two symbols visualized on the screen (+/-, left/right, up/down, 0/1), the slider, etc. may be used as the said means. The suggested values are displayed on the screens 4 of the player monitors 5. The chosen states of the said means are coming into the block 112 (Fig. 3). The value chosen by the player is stored in the memory of the server 3 during the time period T2. During the same time period T2 the random two-number generator 8 connected to the server 3 (Fig. 1), wherein the game software is programmed, transmits its value of one of the two alternatives (0/1) to the block 113. Upon expiration of the time period T2 the computer software compares the value chosen by the player to the value issued by the random two-number generator 8 in the block 115. If the value chosen by the player coincides with the value issued by the generator 8, then within the next time period T2 the movement speed of the moving object 6 controlled by the player is determined according to the formula V = V₀ + X% in the block 117, where V₀ is the constant initial speed after the start, which in a particular case for the objects 6 moving very slowly may be selected as being equal to zero or being very close to zero value. X is a constant increment of the speed, which is programmed into the software by the designer. In a case where a value chosen by the player does not coincide with a value produced by the generator 8, the movement speed of the moving object 6, which is controlled by the player, in the block 116 remains unchanged and is V₀ for the duration of the time period T2. The actions described in the blocks 112 - 117 are continuously done by the player and the software (with the corresponding reaction of the generator 8 and the computer software) until the conditions of the block 118 are fulfilled.

In the block 118 the computer software checks either the number N of the completed rounds made along the circuit by each of the moving objects 6, or the current time passed since the start of the race. The race is finished either at a time when one of the moving objects 6 has made the number N of full rounds along the race circuit, which is stipulated beforehand and known to both players, or when the time period T, i.e., the racing period, which is known to both players beforehand, expires. The winner in the race is either a player, whose moving object 6 has made the number N of full rounds along the race circuit, which is stipulated beforehand and known to both players, or a player, whose moving object 6 has passed the longest linear distance for the time period T preset by the designer.

Depending on the criterion chosen by the organizer for determining the winner of a stage, the said winner may be determined in the block 122 either by the win only in one race (K₁ = 1), or by the wins in two races (K₁ = 2), etc. But, for the purpose of increasing the attractiveness and raising the excitement of a race it is advisable, as studies showed, that the player, who has won at least two successive races, is considered the winner of the stage. The player, who has won the stage, is given the next classification rating CR + 1 in the block 123 and may pass to the new, higher game level L = L + 1. In the next race he will compete against a player who possesses the similar CR after the corresponding game level. The game organizers may determine the maximum classification rating CRₘₐₓ which value is stored in the block 124 and corresponds to the maximum game level. After reaching CRₘₐₓ a player receives the status of the game champion.

The random two-number generator 8 (Figs. 1, 4) comprises a drum 209 (Fig. 5) made transparent and rotating. Light-absorbing balls 210 and light-reflecting balls 211 are located inside the drum 209. The generator 8 comprises a light source 212 which light beam is directed to the area where the light-absorbing balls 210 and the light-reflecting balls 211 are located. A photo detector 213 is arranged so as to be capable of receiving the light beam reflected from the light-absorbing balls 210 and the light-reflecting balls 211. Also, in the Fig. 5 schematically showed are a motor 214 for rotating the drum 209, a feeding device 215 where the equal numbers of the light-absorbing balls 210 and the light-reflecting balls 211 are located before feeding them to the drum 209. The light-absorbing balls 210 may be made painted black and the light-reflecting balls may be made white or covered with mirror-like surface. The drum 209 may be made in the cylindrical or spherical shape.

In a case where the light source 212 is made so as to issue a continuous light flow, the photo detector 213 may comprise, all being connected in series: a photo detecting device (optical sensor), an analog-digital converter (AD converter) and an amplifier for matching an output signal with the signal of a required level coming into the data transmission serial port of the server 3.

The generator 8 operates as follows.

When a direct light beam issued by the light source 212 falls on the area where the light-absorbing balls 210 and the light-reflecting balls 211 are located, the beam reflected therefrom has dynamically different light flow intensity due to rotation of the drum 209. The photo detector 213 monitors the intensity of the reflected light flow, and a sequence of high-level and low-level signals is generated at its output. High-level signals are taken as the digital value of logical 1, and low-level signals -as that of logical 0, or vice versa. Thus, in the preset, equal time periods a sequence of two random values, which corresponds to continuous generation of two random numbers, is generated at the output of the photo detector 213.

### INDUSTRIAL APPLICABILITY

The claimed method of a network computer race game and the optomechanical random two-number generator may be most successfully utilized in the industry of virtual contests in the Internet with a big number of participants.

## Claims

1. A method of playing a race game, comprising:
a) playing a game on the users' personal computers connected over a network to a server that is programmed with the game software, said server transmitting data files over the network to personal computers that receive them and form images of at least two moving objects on the monitor screens of said personal computers, data on users of said personal computers being stored in the data base of said server;
b) forming initial movement speed of said moving object images, being equal to zero at the start and being constant or equal to zero after the start;
c) providing said personal computers with a means enabling users to control the said image movement speed of the moving objects selected by them;
d) programming two random numbers produced by a random two-number generator into the game software;
e) making said means enabling users to control said image movement speed of the moving objects so as to ensure only two states of control signals to control the movement speed and, consequently, change positions of the moving object images;
f) pre-correlating each of said two states of the means enabling users to control the image movement speed of the moving objects with one of two random numbers produced by said random two-number generator, changing the movement speed of said moving object images when one of the states of the said means coincides with a preset number correlated thereto, and maintaining said initial movement speed of said moving object images after the start;
g) A race is finished when the image of a moving object on the monitor screen of the personal computer of one user reaches a definite preset position on the screen, or a race is finished upon expiration of the preset time; accordingly, the race winner is considered to be the user of a personal computer, whose moving object image has reached said definite position on the screen first or whose moving object image has passed the longest distance compared to said moving object image on the personal computer of another user, the particulars on the race winner being loaded into the data base of the server;
h) said game playing on users' personal computers is conducted in several stages comprising at least one said race, the winner of each stage being given a classification rating to be stored in the data base of the server, thus ensuring playing the game at subsequent stages between the users of personal computers having similar classification rating.

2. A method according to claim 1, **characterized in that** said classification rating is assigned to the winner of two successive races.

3. A method according to claim 1, **characterized in that** an optomechanical generator is used as said random two-number generator, which is made in the form of a transparent rotating drum filled with light-absorbing balls and light-reflecting balls, a light source is directed to said drum into the area where said balls are located, and a light beam reflected from said balls is detected by a photo detector which output is connected to said server.

4. A method according to claim 3, **characterized in that** a picture of said transparent rotating drum is transmitted to the server and to the monitor screens of the users' personal computers with the use of a television or video camera.

5. A method according to claim 3, **characterized in that** values of the photo detector output signals are stored in the data base of the server for recording them into a protocol.

6. A method according to claim 1, **characterized in that** at least one of the said final stages of the game is held on personal computers in a television studio and a picture of the studio and the said transparent rotating drum is transmitted to video monitors.

7. A method according to claim 1, **characterized in that** when loading particulars on the users of personal computers into the data base of the server, additional data on the continent, the country and the city that are represented by a user participating in the game is to be loaded into the data base.

8. A method according to claim 1, **characterized in that** when using animated images of cars as the said moving object images, additional data on the makers of the cars, their types, petrol types, oil trademarks, colors of cars, which a personal computer user may select from for playing the game, is to be loaded into the data base of the server.

9. A method according to claim 1, **characterized in that** when using animated images of aircraft as the said moving object images, additional data on the producers of the aircraft and their types, which a personal computer user may select from for playing the game, is to be loaded into the data base of the server.

10. A method according to claim 1, **characterized in that** when using animated images of ships, speed-boats, yachts as the said moving object images, additional data on the manufacturers of the vessels, their types and colors, which a personal computer user may select from for playing the game, is to be loaded into the data base of the server.

11. A method according to claim 1, **characterized in that** when using animated images of horses as the said moving object images, additional data on their breeds, places taken at previous races, speeds, endurance, colors, which a personal computer users may select from for playing the game, is to be loaded into the data base of the server.

12. A method according to claim 1, **characterized in that** when using animated images of animals as the said moving object images, additional data on their natural habitat, habits, running speed, endurance, color, which a personal computer user may select from for playing the game, is to be loaded into the data base of the server.

13. A method according to claim 1, **characterized in that** two keys of the user's computer keyboard are to be used as a means enabling the user to control the movement speed of the moving object images.

14. A method according to claim 1, **characterized in that** an image of two symbols on the user's personal computer monitor screen, which are actuated by positioning the cursor over one of the symbols and clicking the mouse, is to be used as a means enabling users to control image movement speed of the moving objects.

15. A method according to claim 1, **characterized in that** the representation of the scroll bar on the monitor screen of the user's personal computer, which is actuated with the cursor when performing a "drag-and-drop" operation, is to be used as a means enabling users to control image movement speed of the moving objects.

16. A method according to claim 1, **characterized in that** when playing a game on user personal computers connected to the server over a network, the Internet is to be used as the network.

17. A random two-number generator comprising a drum made transparent and rotating, light-absorbing balls and light-reflecting balls located inside the said drum, a light source emitting a light beam directed to the area where said balls are located, and a photo detector arranged so as to be capable of receiving a light beam reflected from said balls.
